**Europäisches Patentamt**

(19) **European Patent Office**

**Office européen des brevets**

(11) Veröffentlichungsnummer: **0 235 343**
**B1**

(12) **EUROPÄISCHE PATENTSCHRIFT**

(45) Veröffentlichungstag der Patentschrift:
**10.01.90**

(21) Anmeldenummer: **86103948.5**

(22) Anmeldetag: **22.03.86**

(51) Int. Cl.⁴: **B65G 39/07**, C23D 5/00,
B65G 39/09

(54) Förderrolle, insbesondere Förderbandtragrolle.

(30) Priorität: **22.02.86 DE 3605731**

(43) Veröffentlichungstag der Anmeldung:
**09.09.87 Patentblatt 87/37**

(45) Bekanntmachung des Hinweises auf die Patenterteilung:
**10.01.90 Patentblatt 90/2**

(84) Benannte Vertragsstaaten:
**AT BE CH DE FR GB IT LI LU NL SE**

(56) Entgegenhaltungen:
**DE-A- 2 218 319**
**DE-A- 2 358 809**
**FR-A- 2 301 482**
**GB-A- 1 248 241**

(73) Patentinhaber: **Westfalia Email Otterstedde GmbH & Co. KG, Alte Ladestrasse 46/48, D-4730 Ahlen-Vorhelm(DE)**

(72) Erfinder: **Leugermann, André, Zur Mühlenstrasse 1, D-4410 Warendorf(DE)**

(74) Vertreter: **Herrmann-Trentepohl, Werner, Dipl.-Ing. et al, Schaeferstrasse 18, D-4690 Herne 1(DE)**

ACTORUM AG

## Beschreibung

Die Erfindung betrifft eine Förderrolle, insbesondere eine Förderbandtragrolle gemäß dem Oberbegriff des Patentanspruches 1.

In der Fördertechnik dient eine Mehrzahl von Rollen entweder selbst als förderndes Organ, welches mit den Stahlzylindern der Rollen das Fördergut unmittelbar unterstützt. Oder die Rollen unterstützen das fördernde Organ, z.B. ein Förderband. Die Erfindung richtet sich vorzugsweise auf diese Förderbandtragrollen.

Förderbandtragrollen in der Bauart mit Kappenlagerung werden im allgemeinen in geringerer Zahl eingesetzt als die Bauart mit Festachse und Lostrommel. Die Erfindung betrifft daher insbesondere diese Bauart. Der Mantel der Lostrommel besteht in der Regel aus einem geschweißten oder einem nahtlos gezogenen, weniger häufig aus einem gerollten, tiefgezogenen Stahlblech. Die die Stirnseiten abdeckenden Kappen bestehen aus Stahl oder Grauguß, seltener aus einem tiefgezogenen Stahlblech oder sind im Gesenk geschmiedet. Ihre Befestigung erfolgt meistens durch Einpressen oder Einschweißen an den Enden der Lostrommel.

Im Betrieb dieser Förderrollen ergibt sich einerseits durch die Belastungen eine erhebliche dynamische Beanspruchung des Rollenmantels. Berücksichtigt werden muß ferner, daß bei Förderbandtragrollen mit Festachse bauartbedingt, die die Trommel bildenden Kappen eingepreßt werden, was zum Auftreiben der Trommelenden und an diesen Stellen zu einer Ausdehnung des Trommelmantels führt.

Es sind Förderbandtragrollen bekannt, bei denen als Oberflächenschutz eine Ummantelung des Stahlzylinders dient, welche aus einem elastischen bzw. elastomeren Kunststoff bzw. aus Naturgummi besteht. Diese Werkstoffe sind zwar duktil, d.h. vor allem schlagfest infolge ihrer Verformbarkeit, verhalten sich aber sonst nicht günstig. Die Erfindung geht aus von einer Förderbandtragrolle, wie sie in der DE-OS 2 358 809 beschrieben ist. Bei diesen bekannten Förderbandtragrollen besteht die Verschleißschicht aus einem auf dem Rollenmantel aufgezogenen Rohr aus abriebfestem Material, beispielsweise Glas oder Keramik, wobei zwischen der Oberfläche des Rollenmantels und dem aufgezogenen Rohr eine Haft- und Pufferschicht aus dauerelastischem Material vorgesehen ist. Ein Nachteil ist hierbei die relativ große Wandstärke der Ummantelung, welche den wirksamen Außendurchmesser der Förderbandtragrolle vergrößert.

Weiterhin kann in trockenen Betrieben die elektrostatische Aufladung des Mantelwerkstoffes dessen Anwendung ausschließen, wenn Zündgefahr vorliegt, wie dies im Untertagebetrieb in schagwettergefährdeten Gruben der Fall ist. Darüberhinaus verformt sich im Betrieb die Haft- und Pufferschicht, so daß die aufgetragene Verschleißschicht abplatzen kann. Dadurch wird der Verschleiß zum einen beschleunigt und zum anderen vergrößert sich der Rollwiderstand, was im Betrieb zu erheblicher Wärmeentwicklung führt, die sich bis zur Brandgefahr steigern kann. Insbesondere entsteht dadurch im Untertagebetrieb ein praktisch nicht zu überwindendes Einsatzhindernis. Eine weitere Alternative der vorbekannten Förderbandtragrolle sieht vor, daß die auf den Rollenmantel aufgebrachte Verschleißschicht aus einem in ein Bindemittel eingebetteten abriebfesten Granulat besteht. Das Bindemittel soll aus einem wärmebeständigen Kunststoff und das Granulat aus Glasperlen bestehen. Auch diese Ausführungsform kann zur Lösung der mit der elektrostatischen Aufladung verbundenen Probleme nicht beitragen. Zudem können Granulatkörner im Betrieb aus der Bindemittelschicht herausgebrochen werden, wodurch sich ebenfalls die Reibung erhöht. Neben der damit verbundenen Brandgefahr macht sich die . Wärmeentwicklung auch bezüglich der Standfestigkeit des Bindemittels negativ bemerkbar.

Der Erfindung liegt daher die Aufgabe zugrunde, eine Förderrolle der als bekannt vorausgesetzten Art zu schaffen, welche trotz ihres wirksamen Oberflächenschutzes normale Lauf- und Betriebseigenschaften aufweist.

Diese Aufgabe löst die Erfindung mit den Merkmalen des Patentanspruches 1. Zweckmäßige Ausführungsformen der Erfindung sind Gegenstand der Unteransprüche.

Es hat sich überraschend herausgestellt, daß eine Email- oder keramische Fritte mit hohem Weichmetallanteil allen Forderungen genügt. So führt der relativ große Metallanteil in dem Überzug dazu, daß der Überzug schlag- und stoßfest wird. Andererseits ergibt er eine metallische Verbindung des Überzuges mit der Metalloberfläche der Lostrommel, der die Haftung ergänzt, welche durch die mechanische Verzahnung des nicht metallischen, d.h. inbesondere des keramischen Anteils der Fritte auf dem Metall hervorgerufen wird. Dieser Überzug ist schlag- und stoßfest aufgrund seines Metallanteils, aber auch verschleißfest, was sich in einem nach längerem Einsatz erhalten gebliebenen Überzug ausdrückt. Bei Förderbandtragrollen führt die reibende Beanspruchung des Bandmaterials zur Freilegung und zur Politur des Metallanteils in der Fritte an den am höchsten beanspruchten Stellen. Dies verleiht der Rolle eine leitende Oberfläche, welche die Gefahr elektrostatischer Aufladungen ausschließt. Außerdem wird durch die Härte des Überzuges der Rollwiderstand stark herabgesetzt. Das schaltet die Brandgefahr praktisch aus.

Obwohl der Überzug im Gegensatz zu einer Ummantelung mit Kunststoff oder Naturkautschuk eine sehr viel geringere Wandstärke aufweist, ist die durch den Einbrennvorgang hervorgerufene Haftung so stark, daß der Überzug nicht abplatzt und nur durch reibende Beanspruchung abgetragen werden kann. Diese Eigenschaft ermöglicht auch die Beibehaltung der üblichen, wirtschaftlichen Rollenherstellung. Denn beim Einpressen der Kappen in die bereits mit dem fertigen Überzug versehene Trommel kommt es trotz der dabei auftretenden Aufweitung der Trommelenden nicht zu Beschädigungen des Überzuges. Dieser platzt trotz der Ausdehnungen nicht ab, sondern paßt sich diesen elastisch an.

Die erfindungsgemäße Beschichtung hat außerdem die vorteilhafte Eigenschaft, das ungewollte Anbacken von in der Bewetterungsluft enthaltenem Staub auf der Rollenachsoberfläche zu verhindern. Sie verhindern auch, daß Schmutz von der Gurtoberfläche auf die Rolle übertragen wird.

Vorzugsweise erhöht man mit den Mitteln des Patentanspruches 2 gleichzeitig die elektrische Leitfähigkeit des Überzuges und seine Duktilität. Aluminium als Weichmetall in der keramischen Fritte gleitet bei Bandtragrollen auch schneller und führt daher eher zu den damit verbundenen günstigen Eigenschaften.

Es hat sich zudem herausgestellt, daß Emailbzw. keramische Fritten mit den Merkmalen des Patentanspruches 3 zu Überzügen führen, welche an Förderbandtragrollen optimale Eigenschaften hervorrufen. Diese Überzüge werden mit Temperaturen in der Größenordnung von 800°C bis 900°C aufgeschmolzen und eingebrannt. Ihre Haftung auf der Oberfläche des Trommelstahles beruht einerseits auf der metallurgischen Verbindung, andererseits auf der mechanischen Verzahnung, was insgesamt zu einer extrem festen Verbindung des Überzuges mit dem Stahlzylinder führt.

Die Merkmale des Patentanspruches 4 lassen sich durch Tauchen und Fluten des Stahlzylinders im Schlicker, aber auch durch Aufspritzen des Schlickers erreichen.

Überzüge in dieser Stärke vergrößern den Rollendurchmesser praktisch nicht und sind dennoch ausreichend.

Als zweckmäßig hat sich ferner erwiesen, insbesondere bei Bandtragrollen die Überzugdicke der unterschiedlichen Beanspruchung der Rollenoberfläche anzupassen. Dazu dienen die Merkmale des Patentanspruches 5. Hierbei hat die Rolle in der Trommelmitte entsprechend der hier normalerweise auftretenden größten Belastung auch die größte Schichtstärke, welche nach außen entsprechend vermindert ist.

Wenn man das bereits erwähnte Spritzen zum Auftragen des Schlickers auf die Trommeloberfläche anwendet, ergibt sich anders als beim Tauchen und Fluten auf einfache Weise die Möglichkeit, die Innenseite der Lostrommel auszusparen, was Gegenstand des Patentanspruches 6 ist. Beim Einbrennen des Überzuges tritt dann eine Verzunderung der ungeschützten Metalloberfläche auf. Das bedeutet eine vereinfachte Rollenherstellung, weil man anders als bei Ausdehnung des Überzuges auf eine Innenbeschichtung der Lostrommel dann nicht die Trommelenden zu putzen braucht, bevor man die Einsatzkappen einpreßt. Man kann diese Kappen vielmehr ohne Gefahr für den fertigen Überzug einpressen. Außerdem ergibt sich dann der Vorteil, daß bei stark kohlenstoffhaltigen Stählen die Entkohlung nach innen erfolgt und auch die spätere Wasserstoffabscheidung ebenfalls diese Richtung nimmt. Dadurch werden Fehlstellen im Überzug vermieden.

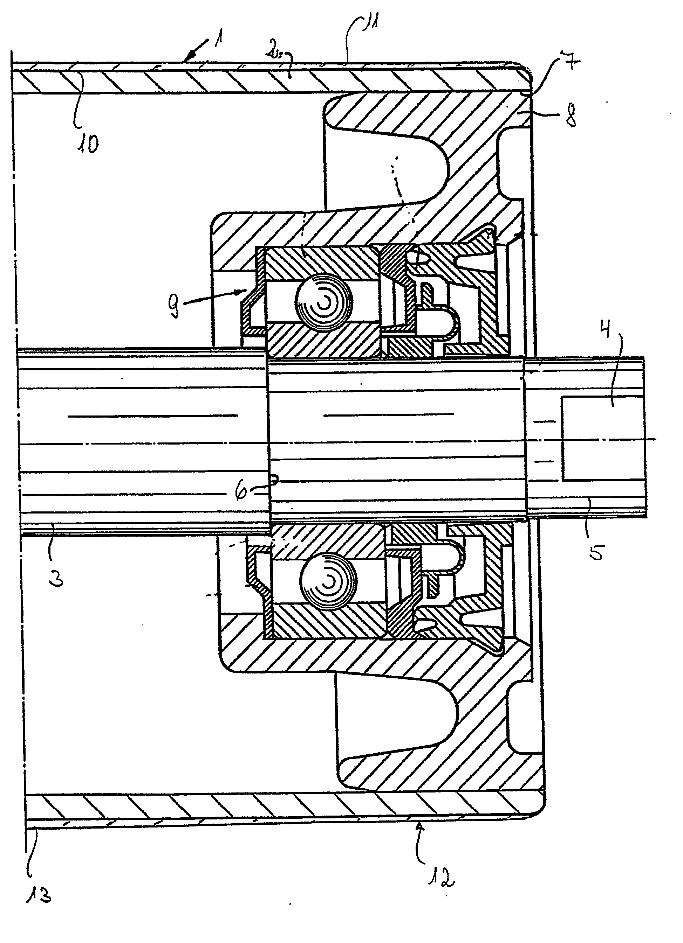

Die Einzelheiten, weiteren Merkmale und andere Vorteile der Erfindung ergeben sich aus der nachfolgenden Beschreibung einer Ausführungsform der Erfindung anhand der Zeichnung. Die Zeichnung zeigt in abgebrochener Darstellung ein Ende einer Bandtragrolle in der Bauart mit Festachse.

Hierbei besteht die Bandtragrolle (1) aus einem Stahlzylinder (2) und einer Festachse (3), welche an gegenüberliegenden Seiten Schlüsselflächen (4) zur Aufnahme in einem Rollenbock aufweist. Diese Schlüsselflächen sind auf einem Achsstummel (5) angeordnet, der über eine Schulter (6) in den Mittelteil der Festachse (3) übergeht. Im übrigen sitzt der Stahlzylinder mit seiner Innenseite (7) kraftschlüssig auf einer eingepreßten Kappe (8), welche eine Labyrinthdichtung mit Fettkammer für ein Wälzlager (9) aufweist, das dauergeschmiert ist.

Die Außenseite (10) der von dem Stahlzylinder (2) gebildeten Lostrommel trägt einen Überzug (11). Die Innenseite (7) ist dagegen ausgespart und zeigt eine verzunderte Stahloberfläche als Folge eines Einbrennvorganges, mit dem der Überzug (11) auf der Außenseite (10) der Lostrommel (2) befestigt wird. Die Wandstärke des Überzuges ist in der Zeichnung übertrieben wiedergegeben. Sie beträgt in Wirklichkeit zwischen 100 und 400 μ. An den Rollenenden, etwa bei (12), ist die Wandstärke des Überzuges (11) geringer und liegt bei 100 bis 250 μ, während sie in der Rollenmitte etwa bei (13) mit einer Wandstärke zwischen 150 und 400 μ versehen ist.

Die Fertigstellung des Überzuges erfolgt vor dem Einpressen der Kappen (8). Zunächst wird der Stahlzylinder (2) mit dem Ziel einer Entfettung und Säuberung vorbehandelt. Diese Vorbehandlung erfolgt in wässriger Lösung durch Spülen und Beizen. Der fertig vorbehandelte Stahlzylinder erhält auf seiner Außenseite (10) eine Aufspritzung aus einem Schlicker. Der Schlicker besteht aus einem wässrigen Brei, der aus einer keramischen oder einer Email-Fritte hergestellt wird. Hierbei beträgt der keramische bzw. Email-Anteil etwa 40 bis 50%, während weitere 50 bis 60% aus einem Weichmetall, vorzugsweise aus Aluminium bestehen.

Nachdem der aufgespritzte Schlicker getrocknet ist, wird der Stahlzylinder (2) in einen Brennofen gebracht und auf 800 bis 900°C erhitzt. Diese Temperaturen werden in normalen Brennöfen erreicht und reichen für die Zwecke der Erfindung aus. Niedrigere Temperaturen führen zu einem unvollkommenen Aufschmelzen des getrockneten Schlickers und dazu, daß optimale Eigenschaften des Überzuges (11) nicht erreicht werden. Durch den Einbrennvorgang tritt die beschriebene feste Haftung des Überzuges (11) auf der Fläche (10) des Stahlzylinders (2) ein.

Nach Erkalten der Stahlzylinder können die Kappen (8) ohne weiteres eingepreßt werden.

**Patentansprüche**

1. Förderrolle, insbesondere eine Förderbandtragrolle, welche eine auf einer vorzugsweise feststehenden Achse mit Einsatzkappen gelagerte und von einem Stahlzylinder gebildete Lostrommel aufweist, die auf ihrer Außenseite einen als Oberflächen- und Abriebschutz dienenden Mantel trägt, dadurch gekennzeichnet, daß der Schutzmantel als aufgeschmolzener Überzug (11) ausgebildet ist, der aus einem in dünner Schicht aufgetragenen wässrigen Schlicker besteht, welcher eine keramische oder Email-Fritte mit hohem Weichmetallanteil enthält.

2. Förderrolle nach Anspruch 1, dadurch gekennzeichnet, daß das Metall der keramischen Fritte aus Aluminium besteht.

3. Förderrolle nach einem der Ansprüche zu 1 oder 2, dadurch gekennzeichnet, daß der Weichmetallanteil in der keramischen oder Email-Fritte zwischen 50 und 60 Gew.-% und die keramische bzw. Email-Masse zwischen 40 bis 50 Gew.-% ausmacht.

4. Förderrrolle nach einem der Ansprüche 1 bis 3, dadurch gekennzeichnet, daß der Überzug eine Stärke von 100 bis 400 µ aufweist.

5. Förderrolle nach einem der Ansprüche 1 bis 4, dadurch gekennzeichnet, daß in der Zylindermitte die Überzugsdicke ca. 150 bis 400 µ und über den Einsatzkappen ca. 100 bis 250 µ beträgt.

6. Förderrolle nach einem der Ansprüche 1 bis 5, dadurch gekennzeichnet, daß der Überzug (11) die Außenfläche (10) des Zylindermantels überdeckt und die Innenfläche des Zylindermantels ausgespart ist.

7. Förderrolle nach einem der Ansprüche 1 bis 6, dadurch gekennzeichnet, daß der Überzug (11) als Antihaftüberzug zur Verhinderung des Anbackens von Verschmutzungen dient.

8. Förderrolle nach einem der Ansprüche 1 bis 7, gekennzeichnet durch einen Überzug (11) mit geringem elektrischen Widerstand zur Vermeidung elektrostatischer Aufladungen der Förderrolle.

**Claims**

1. A conveyor roller, in particular a conveyor belt supporting roller, having a free drum supported on a preferably fixed axle by operational end caps and formed by a steel cylinder, which has a casing on its outside which serves as protection for the upper surfaces and against abrasion, characterised in that the protective casing is formed as a melted-on coating (11) consisting of a diluted slip applied in thin layers and containing a ceramic or enamel frit with a high proportion of soft metal.

2. A conveyor roller according to claim 1, characterised in that the metal of the ceramic frit is aluminium.

3. A conveyor roller according to any of claims 1 and 2, characterised in that the proportion of soft metal in the ceramic or enamel frit amounts to between 50 and 60% by weight and the ceramic or enamel mass amounts to between 40 to 50% by weight.

4. A conveyor roller according to any of claims 1 to 3, characterised in that the coating has a thickness of 100 to 400 µ.

5. A conveyor roller according to any of claims 1 to 4, characterised in that the coating thickness is about 150 to 400 µ in the middle of the cylinder, and about 100 to 250 µ over the operational end caps.

6. A conveyor roller according to any of claims 1 to 5, characterised in that the coating (11) covers the outer surface (10) of the cylinder casing whilst the inner surface of the cylinder casing is left uncovered.

7. A conveyor roller according to any of claims 1 to 6, characterised in that the coating (11) serves as a non-stick coating preventing the baking-on of dirt.

8. A conveyor roller according to any of claims 1 to 7, characterised by a coating (11) with low electrical resistance in order to avoid electrostatic charging of the conveyor roller.

**Revendications**

1. Rouleau de transport, en particulier rouleau porteur d'une bande transporteuse, comportant un corps cylindrique en acier monté fou sur un axe de préférence fixe, sur lequel le corps peut tourner grâce à des paliers montés dans des chapeaux insérés dans le corps, celui-ci portant sur sa face externe une couche de revêtement de protection à l'épreuve de l'abrasion; caractérisé en ce que le revêtement de protection (11) est constitué par une couche de matière fondue, obtenue à partir d'une couche mince de pâte à cuire, contenant une matière céramique d'émaillage avec une forte proportion d'un métal mou, dans de l'eau.

2. Rouleau de transport selon la revendication 1, caractérisé en ce que le métal associé à la matière céramique est de l'aluminium.

3. Rouleau de transport selon l'une des revendications 1 ou 2, caractérisé en ce que la proportion pondérale de métal mou associé à la matière céramique d'émaillage est comprise entre 50 et 60%, la proportion pondérale de la matière céramique d'émaillage étant de 40 à 50%.

4. Rouleau de transport selon l'une des revendications 1 à 3, caractérisé en ce que le revêtement présente une épaisseur de 100 à 400 microns.

5. Rouleau de transport selon l'une des revendications 1 à 4, caractérisé en ce qu'au milieu du corps cylindrique du rouleau l'épaisseur du revêtement est de 150 à 400 microns, cette épaisseur étant d'environ 100 à 250 microns à l'endroit des chapeaux montés aux extrémités du corps.

6. Rouleau de transport selon l'une des revendications 1 à 5, caractérisé en ce que le revêtement de protection (11) recouvre la surface externe (10) de la paroi du corps cylindrique du rouleau, la surface interne de cette paroi restant nue.

7. Rouleau de transport selon l'une des revendications 1 à 6, caractérisé en ce que la couche de revêtement (11) sert de couche anti-adhérence pour empêcher le collage des salissures sur le rouleau.

8. Rouleau de transport selon l'une des revendications 1 à 7, caractérisé en ce qu'il comporte un revêtement de protection (11) qui présente une faible résistance électrique, pour éviter la mise en charge électrostatique du rouleau.